# EUROPÄISCHE PATENTANMELDUNG

(11) **EP 1 479 875 A1**
(43) Veröffentlichungstag der Anmeldung: **24.11.2004**
(21) Anmeldenummer: 03011741.0
(22) Anmeldetag: 23.05.2003
(51) Int. Cl.: F01D 25/16, F16C 32/06, F15B 20/00

(54) **Lager für die axiale Lagerung eines Läufers einer Gasturbine**

(71) Anmelder: SIEMENS AKTIENGESELLSCHAFT, 80333 München (DE)
(72) Erfinder: Hajrudin, Ceric, 46045 Oberhausen (DE); Andrija, Duzic, 40223 Düsseldorf (DE); Salvatore, Pasqualino, 40593 Düsseldorf (DE)

(57) **Zusammenfassung**

Die Erfindung betrifft ein Lager für die axiale Lagerung eines Läufers (8) einer Gasturbine, mit einem relativ zur Position des Läufers (8) in seiner Lage fixiert angeordneten Lagerkörper (2), einer vom Lagerkörper (2) aufgenommenen Hydraulikkolben-Anordnung (3, 4) und einem mit der Hydraulikkolben-Anordnung (3, 4) in strömungstechnischer Verbindung stehenden Hydrauliksystem (9). Um ein Lager zu schaffen, das auch die infolge hoher dynamischer Schubkräfte des Läufers (8) auftretenden Lagerkräfte aufnimmt und eine sichere Lagerung des Läufers (8) gewährleistet, wird mit der Erfindung vorgeschlagen, dass zwischen Hydraulikkolben-Anordnung (3, 4) und Hydrauliksystem (9) eine Blende zwischengeschaltet ist.

## Beschreibung

Die Erfindung betrifft ein Lager für die axiale Lagerung einer Welle, insbesondere eines Läufers einer Gasturbine, mit einem relativ zur Position der Welle in seiner Lage fixiert angeordneten Lagerkörper, einer vom Lagerkörper aufgenommenen Hydraulikkolben-Anordnung und einem mit der Hydraulikkolben-Anordnung in strömungstechnischer Verbindung stehenden Hydrauliksystem.

Lager der vorgenannten Art sind an sich aus dem Stand der Technik bekannt und haben sich im alltäglichen Praxiseinsatz bewährt. Der vorzugsweise den Läufer einer Gasturbine umgebende, ringförmig ausgebildete Lagerkörper dient der Anordnung einer Mehrzahl von Hydraulikkolben. Diese sind gegen am Läufer ausgebildete Anschlagsflächen gelagert, so dass eine Abstützung des Läufers in axialer Richtung erfolgt.

Für eine Justage der Lage des Läufers lässt sich die Stellung der hydraulischen Kolben definiert einstellen, was je nach eingestelltem Kolbenhub zu einer Verschiebung des Läufers der Gasturbine in axialer Richtung führt. Die Hydraulikkolben-Anordnung ermöglicht es mithin, den Läufer der Gasturbine in Relation zum Lager bedarfsgerecht auszurichten. In nachteiliger Weise erzeugt jedoch die sich beim Verschieben des Läufers einstellende Geschwindigkeit des Läufers hohe dynamische Kräfte, die eine Überlastung des Lagerkörpers und des Lagergehäuses der Gasturbine hervorrufen können. Infolge der axialen Verschiebung des Läufers kann es mithin zu einem Totalausfall des Lagers kommen. Dabei ist insbesondere das Verfahren des Läufers in Strömungsrichtung problematisch, da in dieser Verschiebungsrichtung sehr hohe Schubkräfte auf den Läufer einwirken.

Hiervon ausgehend ist es daher Aufgabe der Erfindung, unter Vermeidung der vorgenannten Nachteile ein Lager bereitzustellen, das auch die infolge hoher dynamischer Schubkräfte des Läufers auftretenden Lagerkräfte aufnimmt und eine sichere Lagerung des Läufers gewährleistet.

Zur Lösung dieser Aufgabe wird mit der Erfindung ein Lager der vorbeschriebenen Art vorgeschlagen, das dadurch gekennzeichnet ist, dass zwischen Hydraulikkolben-Anordnung und Hydrauliksystem eine Blende zwischengeschaltet ist.

Die erfindungsgemäße Zwischenordnung einer Blende bewirkt, dass das durch die einzelnen Kolben verdrängte Hydraulikmittel zunächst durch die Blende geführt wird, was in vorteilhafter Weise zu einem Abbau der kinetischen Energie führt. Die auf den Lagerkörper einwirkenden Belastungen können so reduziert werden, womit die Gefahr einer Überlastung minimiert ist. Selbst bei einer auf den Läufer einwirkenden maximalen Kraft kann von der zwischen Hydraulikkolben-Anordnung und Hydrauliksystem angeordneten Blende genügend kinetische Energie dissipiert werden, so dass eine Überlastung des Lagers infolge der dynamischen Kräfte des Läufers verhindert wird. Eine sichere Lagerung des Läufers der Gasturbine ist damit auch bei einem etwaigen Auftreten hoher dynamischer Schubkräfte gewährleistet.

Gemäß einem weiteren Merkmal der Erfindung ist vorgesehen, dass die Hydraulikkolben-Anordnung eine Mehrzahl von jeweils in entsprechenden Kolbenkammern angeordneten Kolben aufweist. Durch die Anordnung einer Mehrzahl von Hydraulikkolben wird in vorteilhafter Weise eine vergleichmäßigte Krafteinleitung erzielt, die ein gradliniges und positionsgenaues Verfahren des Läufers der Gasturbine ermöglicht.

Vorgesehen sein kann mit der Erfindung des weiteren, dass die Kolbenkammern hydraulisch ausgebildete Bohrungen sind. Selbstverständlich sind auch andere geometrische Ausgestaltungen denkbar, doch hat sich herausgestellt, dass insbesondere zylindrisch ausgebildete Kolbenkammern eine optimierte Kraftverteilung ermöglichen.

Gemäß einem besonderen Vorteil der Erfindung sind die Kolbenkammern strömungstechnisch miteinander verbunden. Erreicht wird hierdurch in vorteilhafter Weise ein Druckausgleich zwischen den einzelnen Kolbenkammern, wodurch zum einen eine gleichmäßige Lastverteilung, zum anderen aber auch ein gleichmäßig gradliniges Verschieben des Läufers der Gasturbine erreicht wird. Die einzelnen Kolbenkammern können dabei strömungstechnisch über entsprechend ausgebildete Bohrungen an einen gemeinsamen Druckraum angeschlossen sein oder aber über entsprechend ausgebildete Bohrungen direkt strömungstechnisch miteinander in Verbindung stehen. Entscheidend ist, dass ein Druckausgleich zwischen den einzelnen Kolbenkammern erfolgen kann.

Gemäß einem weiteren Merkmal der Erfindung ist die Hydraulikkolben-Anordnung ringförmig ausgebildet und umgibt den im Querschnitt kreisförmig ausgebildeten Läufer der Gasturbine. Für eine optimierte Kraftübertragung der Hydraulikkolben auf den Läufer sind die Kolben in Bezug auf die ringförmig ausgestaltete Hydraulikkolben-Anordnung in äquidistanten Abständen zueinander angeordnet, so dass eine gleichförmige Kraftverteilung erzielt werden kann. Je nach Ausgestaltung und Größe der ringförmig ausgebildeten Hydraulikkolben-Anordnung kann der die Kolbenkammern miteinander verbindende, gemeinsame Druckraum gleichfalls ringförmig ausgebildet sein und die Hydraulikkolben-Anordnung umgeben.

Gemäß einem weiteren Merkmal der Erfindung sind zwei von einander separat ausgebildete Hydraulikkolben-Anordnungen vorgesehen, die einander gegenüberliegend am Lagerkörper angeordnet sind. Bei dieser Ausgestaltung des erfindungsgemäßen Lagers verfügt der Lagerkörper über insgesamt zwei Hydraulikkolben-Anordnungen, die je nach Ausgestaltung jeweils über mehrere Kolben verfügen. Die Kolben der ersten Hydraulikkolben-Anordnung wirken mit einer ersten Anschlagsfläche und die Kolben der zweiten Hydraulikkolben-Anordnung mit einer zweiten Anschlagsfläche des Läufers zusammen. Bei einer Verschiebung des Läufers der Gasturbine werden infolge dieser vorbeschriebenen Anordnung die Kolben der einen Hydraulikkolben-Anordnung ausgefahren, wohingegen die Kolben der anderen Hydraulikkolben-Anordnung eingefahren werden. Bei einer Verschiebung des Läufers in entgegengesetzter Richtung erfolgt eine Kolbenverschiebung der Hydraulikkolben-Anordnungen gleichfalls in entgegengesetzter Richtung. In Bezug auf die Schubrichtung des Läufers wird die eine Hydraulikkolben-Anordnung als Hauptspurlager und die andere Hydraulikkolben-Anordnung als Nebenspurlager bezeichnet.

Gemäß einem weiteren Merkmal der Erfindung sind die beiden Hydraulikkolben-Anordnungen, das heißt das Hauptspurlager und das Nebenspurlager strömungstechnisch miteinander verbunden. Das infolge einer Verschiebung des Läufers aus einer der beiden Hydraulikkolben-Anordnungen heraus verdrängte Hydraulikmedium kann so zum Druckaufbau innerhalb der anderen Hydraulikkolben-Anordnung verwendet werden.

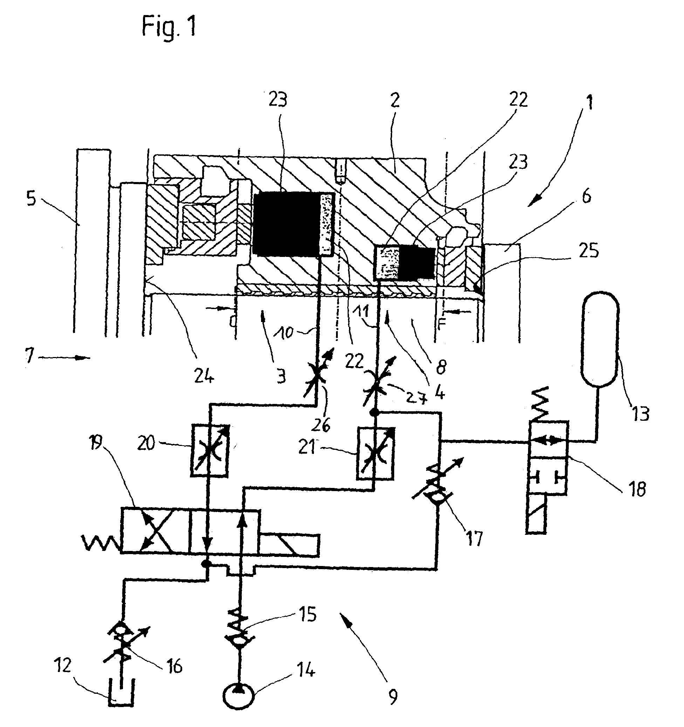

Ist der Läufer der Gasturbine entgegen der Schubrichtung verschoben, so kann im Falle des Ausfallens der Hydraulikmittelversorgung, beispielsweise durch einen Leitungsbruch oder dergleichen, ein gesteuertes Abstellen der Gasturbine nicht mehr gewährleistet werden. Begründet ist dies dadurch, dass die Hydraulikkolben-Anordnung der Nebenspurseite des Lagerkörpers, das heißt die Nebenspurlagerung nicht mehr mit Hydraulikmittel versorgt werden kann. Um auch im Falle eines Ausfalls der Hydraulikmittelversorgung ein gezieltes Abstellen der Gasturbine ermöglichen zu können, wird gemäß einem weiteren Merkmal der Erfindung vorgeschlagen, dass die beiden Hydraulikkolben-Anordnungen unter Zwischenschaltung eines 4/2-Wegeventils strömungstechnisch miteinander verbunden sind. Die Anordnung eines solchen Wegeventils ermöglicht es in vorteilhafter Weise, dass auch bei einem Ausfall der Hydraulikmittelversorgung Hydraulikmittel aus den Zylinderkammern der Hauptspurseite des Lagerkörpers in die Zylinderkammern des Nebenspurlagers gefördert werden können. Zu diesem Zweck ist das 4/2-Wegeventil lediglich in stromlose Position zu schalten. Infolge der Schubkraft des Läufers der Gasturbine auf die Kolben des Hauptspurlagers wird sodann das Hydraulikmittel aus den Kolbenkammern der Hydraulikkolben-Anordnung der Hauptspurseite in die Kolbenkammern des Nebenspurlagers gefördert. Ein gesteuertes Abstellen der Gasturbine kann so auch bei einem Ausfall der Hydraulikmittelversorgung gewährleistet werden. Weitere Vorteile und Merkmale der Erfindung ergeben sich aus der Beschreibung anhand Fig. 1, die in teilgeschnittener Seitenansicht ein erfindungsgemäß ausgebildetes Lager zeigt.

Dargestellt ist in Fig. 1 in teilgeschnittener Seitenansicht das erfindungsgemäße Lager 1. Dieses dient der axialen Lagerung eines Läufers 8 einer Gasturbine und beinhaltet einen Lagerkörper 2, der der Aufnahme einer ersten Hydraulikkolben-Anordnung 3 sowie einer zweiten Hydraulikkolben-Anordnung 4 dient. In Bezug auf die Schubrichtung 7 des Läufers 8 ist dabei die Hydraulikkolben-Anordnung 3 auf der Hauptspurseite 5 und die Hydraulikkolben-Anordnung 4 auf der Nebenspurseite 6 des Läufers 8 angeordnet.

Gebildet ist sowohl die Hydraulikkolben-Anordnung 3 als auch die Hydraulikkolben-Anordnung 4 aus einer Mehrzahl jeweils in Kolbenkammern 22 geführten Kolben 23. Über verschieblich angeordnete Zwischenelemente wirken die Kolben 23 der Hydraulikkolben-Anordnung 3 auf die am Läufer 8 ausgebildete Anschlagsfläche 24 und die Kolben 23 der Hydraulikkolben-Anordnung 4 auf die gleichfalls am Läufer 8 ausgebildete Anschlagsfläche 25 ein, so dass insgesamt eine axial verschiebliche Lagerung des Läufers 8 ausgebildet ist. Über die Anordnung der Hydraulikkolben-Anordnungen 3 und 4 im Lagerkörper 2 kann der Läufer 8 beispielsweise einer Gasturbine in axialer Richtung verschieblich positioniert werden. Zu diesem Zweck sind die Kolbenkammern 22 wahlweise mit Hydraulikmittel, beispielsweise Hydrauliköl, befüllbar, wobei die Hydraulikkolben-Anordnung 3 und die Hydraulikkolben-Anordnung 4 über die Leitungen 10 und 11 an ein gemeinsames Hydrauliksystem 9 angeschlossen sind.

Bestandteile des Hydrauliksystems 9 sind ein Tank 12, ein Speicher 13, eine Hydraulikpumpe 14, Rückschlagventile 15, 16 und 17, ein 2/2-Wegeventil 18, ein 4/2-Wegeventil 19 sowie einstellbare Stromregelventile 20 und 21, die als Blende zwischen der Hydraulikkolben-Anordnung 3 bzw. 4 einerseits und dem Hydrauliksystem 9 andererseits angeordnet sind. Zusätzlich befindet sich zwischen der Hydraulikkolben-Anordnung 3 und 4 und dem Hydrauliksystem 9 eine Drossel 26 und 27 als Blende. Die Drosseln 26, 27 werden durch direkt im Lagerkörper 2 angeordnete Strömungsengpässe für das Hydraulikmittel gebildet, ohne dass die Zwischenschaltung einer Leitung für Hydraulikmittel erfolgt.

Eine Axialverschiebung des Läufers 8 gegenüber dem Lagerkörper 2 wird erreicht, indem Hydraulikmittel entweder in die Hydraulikkolben-Anordnung 3 oder die Hydraulikkolben-Anordnung 4 gepumpt wird. Für den Fall, dass Hydraulikmittel in die Hydraulikkolben-Anordnung 3 gedrückt wird, fahren die Kolben 23 entsprechend der eingefüllten Menge an Hydraulikmittel aus und wirken über die zwischengeordneten Elemente auf die Anschlagsfläche 24 des Läufers 8 ein. Erreicht wird hierdurch eine Verschiebung des Läufers 8 entgegen der Schubrichtung 7, das heißt in Bezug auf die Bildebene nach links. Bedingt durch diese Längsverschiebung des Läufers 8 wirkt die Anschlagsfläche 25 auf die Hydraulikkolben-Anordnung 4 ein, infolgedessen aus den entsprechenden Kolbenkammern 22 Hydraulikflüssigkeit verdrängt und über die Leitung 11 dem Hydrauliksystem 9 zugeführt wird. Um zu vermeiden, dass die beim Verschieben des Läufers 8 sich einstellende Geschwindigkeit des Läufers 8 zu hohe dynamische Kräfte erzeugt, die eine Überlastung des Lagerkörpers 2 hervorrufen könnten, ist erfindungsgemäß zwischen Hydraulikkolben-Anordnung 3 einerseits sowie Hydraulikkolben-Anordnung 4 andererseits und dem Hydrauliksystem 9 eine Blende zwischengeschaltet. Diese Blende kann auch bei einer maximal auftretenden Kraft auf den Läufer genügend kinetische Energie dissipieren, so dass eine Überlastung des Lagers 1 infolge der dynamischen Kräfte des Läufers 8 verhindert wird.

Bei der Belastung, die während des Betriebes der Gasturbine bei einer vorgesehenen Verschiebung des Läufers 8 auftritt, begrenzen die Stromregelventile 20, 21 die Strömungsgeschwindigkeit des Hydraulikmittels auf einen vorgegebenen Wert. Die Verschiebung des Läufers 8 erfolgt so mit der vorgegebenen Geschwindigkeit.

Bei einem Fehlerfall im Hydrauliksystem 9, bei dem Ausfall der Stromregelventile 20, 21 oder selbst bei einem Leitungsbruch der am Lagerkörper 2 angeschlossenen Leitung 10, 11 des Hydrauliksystems 9 begrenzen die im Lagerkörper 2 vorgesehenen Drosseln 26, 27 die Strömungsgeschwindigkeit des Hydraulikmittels. Die unvorhergesehene Verschiebung des Läufers 8 in Schubrichtung 7 erfolgt dann mit einer den Lagerkörper 2 vor Schäden schützenden Geschwindigkeit, die größer sein kann als die vorgegebene Geschwindigkeit.

Die Strömungsengpässe im Lagerkörper, die als Drossel 26, 27 die Blende darstellen, werden für eine angenommene Maximalbelastung berechnet, die höher als die Betriebsbelastung ist.

Somit dienen nur die Drosseln 26,27 nur im Fehlerfall als Blende, wohingegen die Stromregelventile 20, 21 während einer vorgesehenen Verschiebung des Läufers als Blende eingreifen.

Erfindungsgemäß ist des weiteren vorgesehen, dass die Hydraulikkolben-Anordnung 3 und die Hydraulikkolben-Anordnung 4 unter Zwischenordnung des 4/2-Wegeventils 19 über das Hydrauliksystem 9 strömungstechnisch miteinander verbunden sind.

Bei aus dem Stand der Technik vorbekannten Lagereinheiten ist es bei einem entgegen der Schubrichtung verschobenen Läufer im Falle des Ausfalls der Hydraulikmittelversorgung nicht möglich, ein gesteuertes Abstellen der Gasturbine zu gewährleisten, denn kann die Hydraulikkolben-Anordnung 4 auf der Nebenspurseite 6 des Lagers 1 nicht mit Hydraulikmittel versorgt werden. Abhilfe schafft hier das erfindungsgemäß zwischen Hauptspurseite 5 und Nebenspurseite 6 zwischengeordnete 4/2-Wegeventil. Dieses kann nämlich im Falle des Ausfalls der Hydraulikmittelversorgung in eine stromlose Position geschaltet werden. Infolge der Schubkraft des Läufers 8 auf die Kolben 23 der Hydraulikkolben-Anordnung 3 wird nämlich Hydraulikmittel aus den Kolbenkammern 22 der Hauptspurseite 5 über das Hydrauliksystem 9 in die Kolbenkammern 22 der Nebenspurseite 6 gefördert. Somit baut sich Druck auf der Seite der Nebenspur auf, so daß im Falle des Druckabfalls der Läufer dort zu halten kommt, wo er gleichfalls stünde, wenn das Lager nicht hydraulisch verstellbar wäre. Hierdurch kann auch bei einer Unterbrechung der Hydraulikmittelversorgung eine Notlauf-Verschiebung des Läufers 8 erreicht werden, infolgedessen ein gesteuertes Abstellen der Gasturbine möglich bleibt.

## Patentansprüche

1. Lager für die axiale Lagerung eines Läufers (8) einer Gasturbine, mit einem relativ zur Position des Läufers (8) in seiner Lage fixiert angeordneten Lagerkörper (2), einer vom Lagerkörper (2) aufgenommenen Hydraulikkolben-Anordnung (3, 4) und einem mit der Hydraulikkolben-Anordnung (3, 4) in strömungstechnischer Verbindung stehenden Hydrauliksystem (9),
**dadurch gekennzeichnet, dass** zwischen Hydraulikkolben-Anordnung (3, 4) und Hydrauliksystem (9) eine Blende zwischengeschaltet ist.

2. Lager nach Anspruch 1,
**dadurch gekennzeichnet, dass**
die Blende im Lagerkörper angeordnet ist.

3. Lager nach Anspruch 1 oder 2,
**dadurch gekennzeichnet, dass**
die Hydraulikkolben-Anordnung (3, 4) eine Mehrzahl von jeweils in entsprechenden Kolbenkammern (22) angeordneten Kolben (23) aufweist.

4. Lager nach einem der Ansprüche 1 bis 3,
**dadurch gekennzeichnet, dass**
die Kolbenkammern (22) zylindrisch ausgebildete Bohrungen sind.

5. Lager nach einem der vorhergehenden Ansprüche,
**dadurch gekennzeichnet, dass**
die Kolbenkammern (22) strömungstechnisch miteinander verbunden sind.

6. Lager nach einem der vorhergehenden Ansprüche,
**dadurch gekennzeichnet, dass**
die Hydraulikkolben-Anordnung (3, 4) ringförmig ausgebildet ist.

7. Lager nach einem der vorhergehenden Ansprüche,
**dadurch gekennzeichnet, dass**
zwei voneinander separat ausgebildete Hydraulikkolben-Anordnungen (3, 4) vorgesehen sind, die einander gegenüberliegend am Lagerkörper (2) angeordnet sind.

8. Lager nach einem der vorhergehenden Ansprüche,
**dadurch gekennzeichnet, dass**
die beiden Hydraulikkolben-Anordnungen (3, 4) strömungstechnisch miteinander verbunden sind.

9. Vorrichtung nach einem der vorhergehenden Ansprüche,
**dadurch gekennzeichnet, dass**
die beiden Hydraulikkolben-Anordnungen unter Zwischenordung eines 4/2-Wegeventils (19) strömungstechnisch miteinander in Verbindung stehen.

10. Lager nach einem der vorhergehenden Ansprüche,
**dadurch gekennzeichnet, dass**
das 4/2-Wegeventil (19) in stromlose Position schaltbar ist.
